# EUROPEAN PATENT APPLICATION

(11) **EP 1 326 369 A1**
(43) Date of publication of application: **09.07.2003**
(21) Application number: 02250125.8
(22) Date of filing: 09.01.2002
(51) Int. Cl.: H04L 9/32

(54) **Compression method of digital signature applying a hash function to compress the data and signing the calculated hash value**

(71) Applicant: Sangikyo Corporation, Yokohama-city, Kanagawa 224-0053 (JP); Santekuto Corporation, Sagamihara-city, Kanagawa 228-0829 (JP)
(72) Inventor: Mita, Fumio, Sagamihara-city, Kanagawa 228-0829 (JP); Atsumi, Osamu, Yokohama-city, Kanagawa 224-0053 (JP)
(74) Representative: Luckhurst, Anthony Henry William

(57) **Abstract**

A compression method of digital signature by a simple procedure not requiring a huge amount of calculation i.e. hashing a document and signing the hash value, all the way being one-way, wherein a serie of numerals a(k) of an arbitrary length is input and arranged in a matrix A(n x n) according to a predetermined arrangement procedure (step P01), next, an algebraic value taken as modulo 10 which is an addition value of respective digits in the line direction and row direction of the matrix A(n x n) is output as compressed numeral A'(n + n) (step P02), thereby, numerals of n digits of respective lines and rows are compressed to a single digit, and the matrix A(n x n) of n x n digits as the whole is compressed to a compressed numeral A'(n + n) of n + n digits in length and width, then, it is judged whether there is a remainder of the series of numerals a(k) to be input, and if there is none, the processing is terminated (step P03), and in case there is a remainder to be input, it is arranged in a matrix A(n x n) according to the same arrangement procedure as the step P01 taking the compressed numeral A'(n + n) output in the step P02 as the first input numeral, before returning to the step P01 (step P04); and in the step P01, the compresed numeral A'(n + n) and the remaining series of numerals (a(k) input following the same are arranged in a matrix A(n x n) according to a similar arrangement procedure.

## Description

### Background of the Invention

### Technical Field of the Invention

The present invention relates to a compression method of digital signature for validation of the legitimacy of document by adding a digital signature text to an electronic document.

In the digital signature, the user of signature creates a signature text from a document and a secret key that only he knows, and sends to a validater together with the original document. The validater validates the document legitimacy from a public key, the signature text and the original document. At this time, in case when a document to be send by the user is long, it is troublesome to divide short the document and attach the signature text one by one to respective ones, and it takes too much time to sign and validate. Then, it shall be performed to compress the document and attach a signature text thereto, in place of the document where the signature text is to be attached.

For the compression of document, a document of an arbitrary length is input in general to a hash function and such a transformation that the output is a positive integral less than n. is performed Hash function, serving to compress a long document, should be able to be computed effectively. However, the hash function, in order to prevent manipulations, should not permit to determine the original document from function values, and requires to be one-way.

Therefore, RSA signature using power remainder operations or EIGamal signature determining discrete logarithm or other signature methods are proposed, however, they all require a considerable quantity of calculation for ensuring the safety.

In consideration of the foregoing, the present invention propose a compression method of digital signature by a simple procedure not requiring a huge amount of calculation, all the way being one-way.

In short, it is a compression method of digital signature, wherein
a sender,
generates a digest by compressing data to be sent by a predetermined compression procedure, creates a cryptographic digest by enciphering the digest by a secret key of the sender, and at the same time,
sends the cryptographic digest by attaching to the data as a signature text, and
a receiver,
restores an original digest by decoding the received cryptographic digest with a public key of the sender, and at the same time, generates a digest of a reception data by compressing the received data with the compression procedure, and validates the legitimacy of the data by comparing the digest of the reception data with the restored original digest, wherein
the compression procedure comprises the steps of:
inputting series of numerals of an arbitrary length and arranging in a matrix of n × n by a predetermined arrangement procedure,
outputting as a compressed numeral the series of numerals of n + n columns in length and width composed of algebraic values taken as modulo 10 which is an addition value of respective digits in the line direction and row direction of the matrix of n × n, and reiterating the steps up to the end of input of the series of numerals.

Furthermore, the present invention is a compression method of digital signature, wherein the arrangement procedure comprises steps of:
arranging series of numerals along diagonals of the matrix, and arranging the remaining series of numerals in the frame other than the diagonals of the matrix.

Still, the present invention is a compression method of digital signature, wherein the arrangement procedure comprises steps of:
generating and delivering an arrangement key by a sender and a receiver, and arranging series of numerals according to an arrangement order specified by the arrangement key.

Still further, the present invention is a compression method of digital signature, wherein, when the series of numerals are input to arrange into a matrix, they are arranged by mixing with the series of numerals where compressed numerals of n + n columns in length and width output in the previous step.

### Brief Explanation of the Drawings

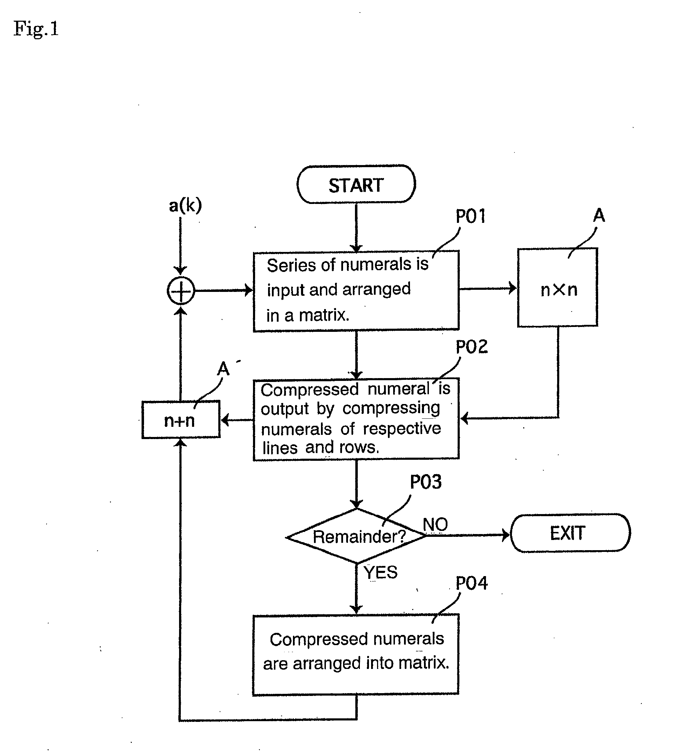

Fig. 1 shows a flow chart of a compression method of digital signature where the present invention is executed.
Fig. 2 is an illustrative drawing of a rectangular transposition where the present invention is executed;
Fig. 3 is an illustrative drawing of a diagonal transposition where the present invention is executed;
Fig. 4 is an illustrative drawing of an arrangement key transposition where the present invention is executed;
Fig. 5 is an illustrative drawing of an arrangement key where the present invention is executed.

### Brief Description of the preferred Embodiments

Now, the present invention will be described referring to attached drawings.

The compression method of digital signature, first of all, inputs a series of numerals a(k) of an arbitrary length and arranges in a matrix A(n × n) according to a predetermined arrangement procedure (step P01).

Next, an algebraic value taken as modulo 10 which is an addition value of respective digits in the line direction and row direction of the matrix A(n × n) is output as compressed numerals A'(n + n) (step P02).

Thereby, numerals of n digits of respective lines and rows are compressed to a single digit, and the matrix A(n x n) of n × n columns as the whole is compressed to a compressed numeral A'(n + n) of n + n columns in length and width.

Next, it is judged whether there is a remainder of the series of numerals a(k) to be input, and if there is none, the processing is terminated (step P03).

In case there is a remainder to be input, it is arranged in a matrix A(n x n) according to the same arrangement procedure as the step P01 taking the compressed numeral A'(n + n) output in the step P02 as the first input numeral, before returning to the step P01 (step P04).

In the step P01, the compressed numeral A'(n + n) and the remaining series of numerals a(k) input following the same are arranged in a matrix A(n × n) according to a similar arrangement procedure.

The appropriate size of the matrix A(n x n) is n = 12 to 23 in case of setting the series of numerals a(k) to decimal number.

Moreover, in case of setting the series of numerals a(k) to hexadecimal number, n= 18 to 36 is appropriate.

Thereby, in case of decimal number, a numeral of 24 to 48 digits is output as compressed numeral A'(n + n), and in case of hexadecimal number, a numeral of 36 to 72 digits is output as compressed numeral A'(n + n).

In addition to the standard rectangular transposition, arrangement procedures for arranging the series of numerals a(k) into a matrix A(n x n) includes also diagonal transposition and arrangement key transposition where the present invention is executed.

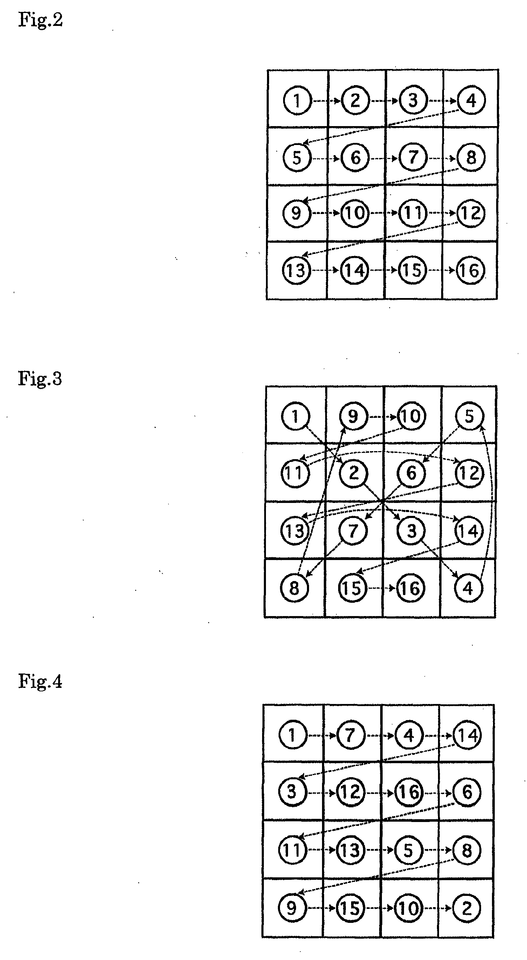

For example, in case of arranging series of numeral of 16 digits in a matrix 4 x 4, the rectangular transposition, as shown in Fig. 2, inputs four digits consecutively digit by digit from the frame of left upper corner of the matrix to the right, shifts the input start line to the following line when the input of the first line is completed, and inputs next four digits in the same way. Then, the aforementioned processing is reiterated until the last line be completely filled.

The diagonal transposition, as shown in Fig. 3, inputs four digits consecutively digit by digit from the frame of left upper corner of the matrix along one diagonal, and then, inputs four digits consecutively digit by digit from the frame of right upper corner in the same manner along the other diagonal.

At this time, the order of one and the other diagonals where the series of numerals are input may reversed.

Moreover, the input order to the diagonal may be any of downward direction or upward direction.

Next, two digits are input consecutively digit by digit to the right into a frame other than the diagonals of the first line of the matrix, the input start line is shifted to the following line when the input of the first line is completed, and next two digits are input in the same way. Then, the aforementioned processing is reiterated until the last line be completely filled.

In the arrangement key transposition, as shown in Fig. 4, four digits of numerals of the input order specified consecutively by the arrangement key are input individually digit by digit from the frame left upper corner of the matrix, the input start line to the following line is shifted when the input of the first line is completed, and four digits of the following input order are input individually in the same way.

Then, the aforementioned processing is reiterated until the last line be completely filled.

The number of frame in the drawing indicates the input order and, for instance, it means to input consecutively numerals of the input order 1st, 7th, 4th and 14th from the left to the right in the first line.

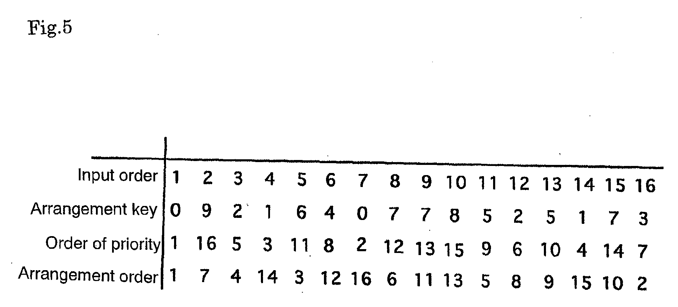

The arrangement key, as shown in Fig. 5, for instance, in case of setting a random number of 16 digits, affords the order of priority respectively to the numerals of 1 to 16 of respective digits.

The order of priority represents the order of numerals of respective digits when numerals of 1 to 16 are aligned (sorted) in the ascending order (or descending order) and, when same numerals appear repeatedly, the priority shall be afforded to the foregoing numeral.

In this case, for example, the numeral O of the first digit of the arrangement key is 1 in the order of priority, and the numeral 9 of the second digit is 16 in the order of priority.

There, the arrangement order of input numerals shall be determined according to the order of priority.

In this case, for instance, the first of the order of priority is the numeral first in the input order, and the same shall be placed in the first line and first row.

Next, the second in the order of priority is the numeral seventh in the input order, and the same shall be placed in the first line and second row.

Thereafter, up to the numeral sixteenth in the order of priority shall be input similarly.

It should be appreciated that, in case where n is several tens of digits, n digits of the first order and n digits of the second order are generated from a series of random numbers, and the order of priority shall be decided by a sort similar to the aforementioned.

The arrangement key, for instance, deliver an arrangement key generated by a sender to a receiver, using Deffie-Hellman key common ownership protocol, for example.

At this time, if it is necessary to prevent an intermediate invasion, the attack is prevented by adding ID information of both the sender and the receiver.

As mentioned hereinabove, the compression method of digital signature according to the present invention comprises the steps of inputting series of numerals of an arbitrary length and arranging in a matrix of n x n by a predetermined arrangement procedure, outputting as compressed numeral series of numerals of n + n columns in length and width composed of algebraic values taken as modulo 10 which is an addition value of respective digits in the line direction and row direction of the matrix of n × n, and reiterating the steps up to the end of input of the series of numerals.

Consequently, the present invention permits to compress the one-way digital signature by a simple method not requiring complex operation processing of large calculation load.

This allows to improve the authentication efficiency, and at the same time, enhance the economy by miniaturizing the computer resources.

In addition, since the one-way property can be enhanced by enlarging the matrix size, a desired safety can be secured easily and, at the same time, the digital signature can be made more compact by enlarging the compression width.

## Claims

1. A compression method of digital signature, wherein
a sender,
generates a digest by compressing data to be sent by a predetermined compression procedure, creates a cryptographic digest by enciphering the digest with a secret key of the sender, and at the same time, sends the cryptographic digest by attaching to the data as a signature text, and
a receiver,
restores an original digest by decoding the received cryptographic digest with a public key of the sender, and at the same time, generates a digest of a reception data by compressing the received data with said compression procedure, and validates the legitimacy of the data by comparing the digest of said reception data with the restored original digest, wherein
said compression procedure comprises the steps of:
inputting series of numerals of an arbitrary length and arranging in a matrix of n x n by a predetermined arrangement procedure,
outputting as a compressed numeral the series of numerals of n + n columns in length and width composed of algebraic values taken as modulo 10 which is an addition value of respective digits in the line direction and row direction of said matrix of n x n, and
reiterating said steps up to the end of input of the series of numerals.

2. The compression method of digital signature of claim 1, wherein said arrangement procedure comprises the steps of:
arranging series of numerals along diagonals of said matrix, and
arranging the remaining series of numerals in a frame other than the diagonals of the matrix.

3. The compression method of digital signature of claim 1, wherein said arrangement procedure comprises the steps of:
generating and delivering an arrangement key by the sender and the receiver, and arranging series of numerals according to an arrangement order specified by said arrangement key.

4. The compression method of digital signature of claim 1, wherein,
when said series of numerals are input to arrange into a matrix,
they are arranged by mixing with the series of numerals input the compressed numerals of n + n columns in length and width output in the previous step.
